# EUROPEAN PATENT APPLICATION

(11) **EP 4 166 605 A1**
(43) Date of publication of application: **19.04.2023**
(21) Application number: 21203112.4
(22) Date of filing: 18.10.2021
(51) Int. Cl.: C08K 7/14, C08L 67/02, C08L 69/00, B29C 65/16

(54) **LASER TRANSPARENT LOW WARPAGE GLASS FILLED PBT COMPOSITIONS FOR LASER WELDING**

(71) Applicant: SHPP Global Technologies B.V., 4612 PX Bergen op Zoom (NL)
(72) Inventor: LUGGER, Jody Ann, Bergen op Zoom (NL); BORST, Robert, Bergen op Zoom (NL); VAN HERBEEK, Hendrikus Petrus Cornelis, Bergen op Zoom (NL); VAN DER MEE, Mark Adrianus Johannes, Bergen op Zoom (NL)
(74) Representative: Dehns

(57) **Abstract**

Disclosed herein are thermoplastic compositions comprising: from about 0.01 wt. % to about 90 wt. % of a polyalkylene terephthalate; from about greater than 0 wt. % to about 50 wt. % of a glass fiber; and from about 0.01 wt. % to about 45 wt. % of a high heat polymer, wherein the combined weight percent value of all components does not exceed 100 wt. %, and all weight percent values are based on the total weight of the composition. The thermoplastic composition exhibits laser transmission between 20% and 80% of incident laser light at a wavelength of 980 nm at 1 millimeter thickness when measured pursuant to DVS Regulation 2243.

## Description

### FIELD OF THE DISCLOSURE

The present disclosure relates to thermoplastic compositions, and in particular to extruded thermoplastic compositions that have a high glass fiber content and high laser transparency.

### BACKGROUND OF THE DISCLOSURE

Laser welding is a technique employed for the joining of plastic parts; typically, at least one plastic part being laser transparent (a cover) and at least one part being laser absorbing (a substrate). The method of joining such parts may be useful for, but is not limited to, the preparation of water-tight enclosures for the automotive industry, for example, RADAR/ADAS sensors. Glass-filled PBT is a typical material for these applications and is desirable for its balance of properties among high heat performance, chemical resistance to automotive fluids and chemicals, mechanical properties (including stiffness), and ease of use. However, because of the inherent nature of PBT being a semi-crystalline resin, the laser light gets scattered by the crystallites yielding poor laser weldability. Such a poor laser weldable performance may also be attributed to a lowered laser transmission because of the addition of a glass filler to the PBT. There remains a need in the art for filled, PBT-based laser weldable materials. These and other shortcomings are addressed by aspects of the present disclosure.

### SUMMARY

Aspects of the disclosure relate to thermoplastic compositions comprising: from about 0.01 wt. % to about 90 wt. % of a polyalkylene terephthalate; from about greater than 0 wt. % to about 50 wt. % of a glass fiber; and from about 0.01 wt. % to about 45 wt. % of a high heat polycarbonate, wherein the high heat polymer has a glass transition temperature greater than 155 °C. The thermoplastic composition may exhibit laser transmission between 20% and 80% of incident laser light at a wavelength of 980 nm at 1 millimeter thickness when measured pursuant to DVS Regulation 2243, wherein the combined weight percent value of all components does not exceed 100 wt. %, and all weight percent values are based on the total weight of the composition.

Aspects of the disclosure further relate to methods of making a thermoplastic composition.

### BRIEF DESCRIPTION OF THE FIGURES

The accompanying figures, which are incorporated in and constitute a part of this specification, illustrate several aspects and together with the description serve to explain the principles of the disclosure.
FIG. 1 shows Table 1 of comparative sample PBT resins.
FIG. 2 shows Table 2 of the physical properties of the comparative samples.
FIG. 3 shows Table 3 of the laser transparency of the comparative samples.
FIG. 4 shows inventive formulations.
FIG. 5 shows laser transparency of inventive formulations.
FIG. 6 shows physical properties of the inventive formulations.
FIG. 7 is a graphical representation of the enthalpy of fusion as a function of the cooling rate for sample E5 compared to CE1 or CE2.
FIG. 8 shows Table 8 for the enthalpies of crystallization for controlled cooling experiments.
FIG. 9 is a graphical representation of the enthalpy of crystallization of the PBT fraction at varying cooling rates.
FIG. 10 shows Table 8 for the enthalpies of fusion on molded parts.
FIG. 11 is a graphical representation of the enthalpy of fusion of the PBT fraction of injection molded samples.
FIG. 12 shows Table 9 for the formulations and observed warpage.
FIG. 13 shows Table 10 for the warpage measurements of the formulations.
FIG. 14 is a diagram of the gradient of molded plaques for laser transmission values.
FIG. 15 shows Table 11 for the laser transmission data of Samples of E5
FIG. 16 is a graphical representation of laser transmission as a function of molded sample thickness for Example 5.

### DETAILED DESCRIPTION

The present disclosure can be understood more readily by reference to the following detailed description of the disclosure and the Examples included therein.

Laser welding is a technique employed for the joining of plastic parts and is often employed in the production of water-tight enclosures for the automotive industry. While glass filled PBT is commonplace for automotive applications, the semi-crystallinity of PBT may cause these compounds to exhibit poor laser welding performance. Such a poor laser weldable performance may be attributed to lower laser transmission of the glass filled PBT.

Typically, glass-fiber reinforced semi-crystalline polymer have a low-to-medium transparency for light, specifically laser light of 980 nm, because of the refractive index mismatch between the amorphous and the crystalline phase and with the glass-fiber filler. This mismatch may cause scattering of the light beam. While high crystallinity polymers are generally desired from a performance standpoint in terms of chemicals resistance, HDT, and stiffness, the higher the crystallinity of such materials, the more scattering takes place. As such, the light beam intensity, laser power, required for the welding operation must be increased. Low-to-medium laser transparency (high scattering) leads to limited laser welding speeds, requiring a high-power laser; both undesired because of cost-efficiency and the risk of deforming and charring the material. Hence, laser weldable glass-fiber reinforced semi-crystalline PBT compounds have proven difficult to achieve, particularly where a high degree of crystallinity is to be retained.

Accordingly, a high laser transmission in addition to crystalline PBT is desired to reduce laser cycle times, allowing for higher thicknesses, and reducing the risk of charring the material. PBT is already considered a fast crystallizing resin, providing a very high flow when molten. When injection molded it crystallizes rapidly in the mold allowing for short cycle times and easy mouldability. The addition of glass fiber fillers provide compositions having short term heat resistance, a high stiffness, and dimensional stability. However, as described herein the addition of glass-fiber reduces laser transparency (caused by the scattering of light) and increases warpage. The glass fiber filler augments the scattering attributed to RI mismatch between the amorphous and the crystalline phase of the polymer resin. Scattering reduces the intensity of the laser beam and diffuse scattering causes the laser beam to broaden when hitting the laser absorbing substrate. The reduction can be compensated for, up to a level, by increased laser intensity and a decreased welding speed, however, when the Transmission level at 1.0 mm level drops below 10 %, laser weldability is considered severely hampered. This results in poor laser weld strength, and potential charring as well as requiring low laser speeds and high laser intensity; putting strain on production cycle times and the laser welding equipment. The present disclosure addresses the problem of providing glass filled PBT compounds which exhibit high crystallinity, high heat, high stiffness, low warpage, good thermal endurance, while also demonstrating sufficient laser transparency for laser welding.

The disclosed compositions include a 30% GF PBT compound, retaining all typical properties, while maintaining laser transparency and warpage comparable to that of an amorphous resin. As described further herein, laser transparency of semi-crystalline PBT was increased by incorporating a polycarbonate copolymer. The addition of small amounts of the PC resin increased the amount of, and growth, of PBT crystallites resulting that enhanced laser transmission while retaining inherent PBT properties (including crystallinity). Warpage performance was improved by the usage of flat glass fibers affording glass-filled PBT compounds having laser transparency and warpage comparable to an amorphous resins while retaining typical glass-filled PBT properties.

Other efforts have been made to achieve laser transparency of PBT-based polymer compositions. For example, by matching the refractive indexes of the individual components in the compounds, hampering the crystallization of PBT, and, most challenging, expediting crystal growth combined with increasing the amount of crystal nucleation sites resulting in small crystal sizes falling a size-range which does not interfere with the 980nm laser-light. Japanese published application, for example, JP2005/133087 discloses a resin composition incorporating PBT, polycarbonate, elastomer and a high refractive index silicone oil. However, the increase in transmission in the near infrared region achieved resulted in the loss of mechanical properties.

Approaches to increase transparency of PBT by blending with, for example amorphous polyester polycarbonates are disclosed in U.S. Patent Publ. No. 201 1/0256406, DE 10230722 (U.S. Patent. No. 20070129475), U.S. Patent No. 20050165176 and U.S. Patent No. 7396428. In addition, it has been disclosed in US Patent Publication No. 2014-0179855 that near-infrared transparency (800-2500 nm) of the glass filled polymer blend containing crystalline or semicrystalline polymer and amorphous polymers is significantly improved upon replacement of the amorphous phase having a total Fries content of less than 100 ppm by an amorphous phase with a total Fries content of 5400 ppm, as produced by melt polymerization. However, these compositions still exhibit inconsistent transparency in the region where laser light operates.

US Patent Nos. 8,889,768, 8,791 ,179, and 8,318,843 provide examples of expediting crystal growth. This is achieved by a chemical reaction between the nucleating agent and polymeric end groups of PBT to produce ionic end groups, which increases the rate of crystallization. Nevertheless, such chemical nucleation agents have disadvantages because they can degrade many of the amorphous materials used in PBT blends such as polycarbonates and polyester carbonates and the PBT itself as well. The outcomes of such degradations are unstable melt viscosities and deformations due to turbulent flow (splay and jetting). Another disadvantage of very quick crystallization induced by nucleating agents is the tendency to freeze stresses into the part, which can result in warpage. An additional disadvantage of expedited crystal growth is the effect of small-molecular additives being able to "plate-out" form the plastic compound, potentially disturbing secondary operation such as coatings/metallization and or causing the expelling of pollutants and debris.

In view of the challenges described herein, there still exists demand for a glass-filled PBT compound that retains all of the inherent properties of a such semi-crystalline compound; while exhibiting high laser-transmission and low-warpage (similar to, for example, an amorphous resin). Compositions of the present disclosure provide laser transparent glass filled PBT compounds with reduced warpage to be used in the automotive industry.

In various aspects, the present disclosure relates to thermoplastic compositions including: (a) from about 0.01 wt. % to about 90 wt. % of a polyalkylene terephthalate; (b) from about greater than 0 wt. % to about 50 wt. % of a glass fiber; and (c) from about 0.01 wt. % to about 50 wt. % of a high heat bisphenol A based polycarbonate copolymer; wherein the thermoplastic composition exhibits laser transmission between 20% and 80% of incident laser light at a wavelength of 980 nm at 1 millimeter thickness when measured pursuant to DVS Regulation 2243, wherein the combined weight percent value of all components does not exceed 100 wt. %, and all weight percent values are based on the total weight of the composition.

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, for example, combinations of elements from dependent claims that depend upon the same independent claim. Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect. This holds for any possible non-express basis for interpretation, including matters of logic with respect to arrangement of steps or operational flow; plain meaning derived from grammatical organization or punctuation; and the number or type of aspects described in the specification. All publications mentioned herein are incorporated herein by reference to disclose and describe the methods and/or materials in connection with which the publications are cited.

### Definitions

It is also to be understood that the terminology used herein is for the purpose of describing particular aspects only and is not intended to be limiting. As used in the specification and in the claims, the term "comprising" can include the aspects "consisting of' and "consisting essentially of." Unless defined otherwise, all technical and scientific terms used herein have the same meaning as commonly understood by one of ordinary skill in the art to which this disclosure belongs. In this specification and in the claims, which follow, reference will be made to a number of terms which shall be defined herein. As used in the specification and the appended claims, the singular forms "a," "an" and "the" include plural referents unless the context clearly dictates otherwise. Thus, for example, reference to "a polycarbonate" includes mixtures of two or more polycarbonate polymers. As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

As used herein, the terms "optional" or "optionally" means that the subsequently described event or circumstance can or cannot occur, and that the description includes instances where said event or circumstance occurs and instances where it does not. For example, the phrase "optional additive material" means that the additive material can or cannot be included in the thermoplastic composition and that the description includes thermoplastic compositions that both include and do not include additive materials.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound. A weight percent of a component, unless specifically stated to the contrary, is based on the total weight of the formulation or composition in which the component is included.

The terms "BisA," "BPA," or "bisphenol A," which can be used interchangeably, as used herein refers to a compound having a structure represented by the formula: 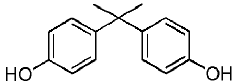 BisA can also be referred to by the name 4,4'-(propane-2,2-diyl)diphenol; p,p'-isopropylidenebisphenol; or 2,2-bis(4-hydroxyphenyl)propane. BisA has the CAS # 80-05-7.

As used herein, "polycarbonate" refers to an oligomer or polymer including residues of one or more dihydroxy compounds, e.g., dihydroxy aromatic compounds, joined by carbonate linkages; it also encompasses homopolycarbonates, copolycarbonates, and (co)polyester carbonates.

As used herein, the term "PPPBP" as used herein refers to a compound having a structure represented by the formula: PPPBP can also be referred to by the following names: 2-Phenyl-3,3-bis(4- hydroxyphenyliphthalimidine; N-Phenyl-3,3-bis(4-hydroxyphenyl)phthalimidine; 3,3-bis(4- hydroxyphenyl)-2-phenylisoindoiin-3 -one; 3,3-bis(4-hydroxyphenyl)-2-phenyI-2,3-dihydro- 1 H-Isoindoline- 1 -one. PPPBP has CAS # 6607-41-6.

As used herein, the term "transparent" means that the level of transmittance for a disclosed composition is from 20% to 80%, specifically greater than 50%. More specifically, the transmittance may refer to transmittance of laser irradiation. In some aspects, the transmittance can be at least 60%, 70%, 80%, 85%, 90%, or 95%, or any range of transmittance values derived from the above exemplified values. In the definition of "transparent", the term "transmittance" refers to the amount of incident laser radiation that passes through a sample measured in accordance with at a thickness of 0.8 millimeter (mm) to 5 mm. As a further example, laser transmission may be observed at a wavelength of 980 nm at 1 millimeter thickness and measured pursuant to DVS Regulation 2243 on a LPKF TMG3 instrument.

The terms "residues" and "structural units", used in reference to the constituents of the polymers, are synonymous throughout the specification. As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application. Each of the materials disclosed herein are either commercially available and/or the methods for the production thereof are known to those of skill in the art. It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

### Laser weldable compositions

Aspects of the disclosure relate to thermoplastic compositions including: (a) from about 0.01 wt. % to about 90 wt. % of a polyalkylene terephthalate; (b) from about greater than 0 wt. % to about 50 wt. % of a glass fiber; and (c) from about 0.01 wt. % to about 45 wt. % of a high heat polycarbonate. The combined weight percent value of all components does not exceed 100 wt %, and all weight percent values are based on the total weight of the extruded thermoplastic composition.

The disclosed compositions are glass filled PBT resins that exhibit high crystallinity, high heat, high stiffness, low warpage, good thermal endurance and laser transparency making them suitable to laser welding purposes. Furthermore, these compositions may provide improved sustainability as they can optionally comprise a post-consumer or post-industrial recycled source for the PBT, or a bio-based source (or a combination thereof) for the PBT. For example, the compositions may comprise filled iQ-PBT or post-consumer recycled PBT (PCR-PBT).

The disclosed compositions may exhibit a laser transmission between 20% and 80% of incident laser light at a wavelength of 980 nm at 1 millimeter thickness when measured pursuant to DVS Regulation 2243. In yet further examples, an injection molded sample of the thermoplastic composition exhibits an enthalpy of fusion that is within 10% or within 5% of the enthalpy of fusion of a reference composition comprising PBT and glass fiber as measured according to melting enthalpy by differential scanning calorimetry (DSC) in a first heating run after injection molding.

### Polyester

In various aspects of the present disclosure, the thermoplastic resin may comprise a polyester. For example, the thermoplastic resin may comprise a polyalkylene ester (a polyester), such as a polyalkylene terephthalate polymer.

Polyesters have repeating units of the following formula (A): 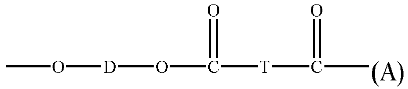 wherein T is a residue derived from a terephthalic acid or chemical equivalent thereof, and D is a residue derived from polymerization of an ethylene glycol, butylene diol, specifically 1,4- butane diol, or chemical equivalent thereof. Chemical equivalents of diacids include dialkyl esters, e.g., dimethyl esters, diaryl esters, anhydrides, salts, acid chlorides, acid bromides, and the like. Chemical equivalents of ethylene diol and butylene diol include esters, such as dialkylesters, diaryl esters, and the like. In addition to units derived from a terephthalic acid or chemical equivalent thereof, and ethylene glycol or a butylene diol, specifically 1,4-butane diol, or chemical equivalent thereof, other T and/or D units can be present in the polyester, provided that the type or amount of such units do not significantly adversely affect the desired properties of the thermoplastic compositions. Poly(alkylene arylates) can have a polyester structure according to formula (A), wherein T comprises groups derived from aromatic dicarboxylates, cycloaliphatic dicarboxylic acids, or derivatives thereof.

Examples of specifically useful T groups include, but are not limited to, 1,2-,1,3-, and 1,4-phenylene; 1,4- and 1,5-naphthylenes; cis- or trans- 1,4-cyclohexylene; and the like. Specifically, where T is 1,4-phenylene, the poly(alkylene arylate) is a poly(alkylene terephthalate). In addition, for poly(alkylene arylate), specifically useful alkylene groups D include, for example, ethylene, 1,4-butylene, and bis-(alkylene-disubstituted cyclohexane) including cis- and/or trans- 1,4-(cyclohexylene)dimethylene.

Examples of polyalkylene terephthalate include polyethylene terephthalate (PET), poly(1,4-butylene terephthalate) (PBT), and poly(propylene terephthalate) (PPT). Also useful are poly(alkylene naphthoates), such as poly(ethylene naphthanoate) (PEN), and poly(butylene naphthanoate) (PBN). A useful poly(cycloalkylene diester) is poly(cyclohexanedimethylene terephthalate) (PCT). Combinations including at least one of the foregoing may be used.

Copolymers including alkylene terephthalate repeating ester units with other ester groups can also be useful. Useful ester units can include different alkylene terephthalate units, which can be present in the polymer chain as individual units, or as blocks of poly(alkylene terephthalates). Specific examples of such copolymers include poly(cyclohexanedimethylene terephthalate)-co-poly(ethylene terephthalate), abbreviated as PETG where the polymer includes greater than or equal to 50 mol % of poly(ethylene terephthalate), and abbreviated as PCTG where the polymer comprises greater than 50 mol % of poly(1,4-cyclohexanedimethylene terephthalate). Poly(cycloalkylene diester)s can also include poly(alkylene cyclohexanedicarboxylate)s. Of these, a specific example is poly(1,4-cyclohexane- dimethanol-1,4-cyclohexanedicarboxylate) (PCCD), having recurring units of formula (B): 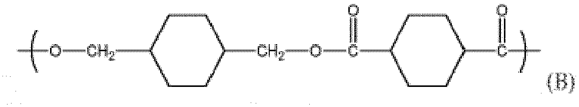 wherein, as described using formula (A), R² is a 1,4-cyclohexanedimethylene group derived from 1,4-cyclohexanedimethanol, and T is a cyclohexane ring derived from cyclohexanedicarboxylate or a chemical equivalent thereof, and can comprise the cis-isomer, the trans-isomer, or a combination comprising at least one of the foregoing isomers.

In another aspect, the composition can further comprise poly(1,4-butylene terephthalate) or "PBT" resin. PBT may be obtained by polymerizing a glycol component of which at least 70 mol %, or at least 80 mol %, consists of tetramethylene glycol and an acid or ester component of which at least 70 mol %, or at least 80 mol %, consists of terephthalic acid and/or polyester-forming derivatives thereof. Commercial examples of PBT include those available under the trade names VALOX^{™} 315, VALOX^{™} 195 and VALOX^{™} 176, manufactured by SABIC^{™}, having an intrinsic viscosity of 0.1 deciliters per gram (dl/g) to about 2.0 dl/g (or 0.1 dl/g to 2 dl/g) as measured in a 60:40 phenol/tetrachloroethane mixture or similar solvent at 23 degrees Celsius (°C) to 30° C. In one aspect, the PBT resin has an intrinsic viscosity of 0.1 dl/g to 1.4 dl/g (or about 0.1 dl/g to about 1.4 dl/g), specifically 0.4 dl/g to 1.4 dl/g (or about 0.4 dl/g to about 1.4 dl/g).

In various aspects, the polyester may comprise a "post-consumer recycled PBT," or "recycled PET," or "postindustrial recycled PBT." As used herein, the term "post-consumer recycled PBT," or "recycled PET," or "postindustrial recycled PBT" may refer to a recycled PBT that comprises at least one impurity not present in a corresponding, substantially similar or identical virgin PBT. The PBT may be reclaimed from post-consumer sources, including but not limited to, home appliances waste for example TV, air-conditioners, washing machines, refrigerators, and like. Post-consumer or post-industrial recycle based components are specifically meant to be "up-cycled" polybutylene terephthalate (PBT) polymers. The term "up-cycled" constitutes the process where post-consumer or post-industrial recycle polyethylene terephthalate (rPET) is chemically brought back to monomers, such as the terephthalate containing monomer bis(2-hydroxyethyl) terephthalate (BHET) and ethylene glycol (EG). Subsequently, BHET is polymerized with butanediol (BDO) to create PBT. Within SABIC this is known as the "iQ process". A number of process and product patents have been granted to SABIC on this technology.

Commercial examples of an upcycled PBT include those available under the trade name ELCRIN^{™} iQ Resin, manufactured by SABIC. The modified PBT may be derived from the poly(ethylene terephthalate) component by any method that involves depolymerization of the poly(ethylene terephthalate) component and polymerization of the depolymerized poly(ethylene terephthalate) component with 1,4 butanediol to provide the modified PBT. For example, the modified poly(butylene terephthalate) component may be made by a process that involves depolymerizing a poly(ethylene terephthalate) and/or a poly(ethylene terephthalate) copolymer, with a 1,4 butanediol component at a temperature from 180 °C to 230 °C, under agitation, at a pressure that is at least atmospheric pressure in the presence of a catalyst component, at an elevated temperature, under an inert atmosphere, to produce a molten mixture containing an oligomer containing ethylene terephthalate moieties, an oligomer containing ethylene isophthalate moieties, an oligomer containing diethylene terephthalate moieties, an oligomer containing diethylene isophthalate moieties, an oligomer containing butylene terephthalate moieties, an oligomer containing butylene isophthalate moieties, a covalently bonded oligomeric moiety containing at least two of the foregoing moieties, 1,4 butanediol, ethylene glycol, or a combination thereof; and agitating the molten mixture at sub-atmospheric pressure and increasing the temperature of the molten mixture to an elevated temperature under conditions sufficient to form a modified PBT containing at least one residue derived from the poly(ethylene terephthalate) component.

As described herein, the composition may comprise from about 0.01 wt. % to about 90 wt. % of a polyalkylene terephthalate. In further examples, the composition may comprise from about 5 wt. % to about 90 wt. % of a polyalkylene terephthalate, or from about 10 wt. % to about 90 wt. % of a polyalkylene terephthalate, or from about 15 wt. % to about 90 wt. % of a polyalkylene terephthalate, or from about 60 wt. % to about 90 wt. % of a polyalkylene terephthalate, or from about 70 wt. % to about 90 wt. % of a polyalkylene terephthalate, or from about 90 wt. % to about 90 wt. % of a polyalkylene terephthalate, or from about 55 wt. % to about 90 wt. % of a polyalkylene terephthalate, or from about 60 wt. % to about 90 wt. % of a polyalkylene terephthalate, or from about 75 wt. % to about 99 wt. %.

### Glass Fiber

The disclosed thermoplastic compositions may comprise a glass fiber. It is known that glass fiber filled resins offer enhanced structural properties versus their short glass fiber counterparts, including a balance of impact strength and stiffness, with improved resistance to crack propagation. The resin compositions disclosed herein may include a glass fiber.

In various aspects, the glass fiber can be a reinforcing filler increasing, for example, the flexural modulus and strength of the polyamide base resin. As an example, the diameter of the glass fiber can range from about 5 µm (micrometer) to about 35 µm. Generally, where a thermoplastic resin is reinforced with glass fibers in a composition form, fibers having a length of about 0.4 mm (millimeter) or longer are referred to long fibers, and fibers shorter than this are referred to as short fibers. In one aspect, the diameter of the glass fibers can be about 10 µm. In a further aspect, the glass fibers have a length of 1 mm or longer. In a further example, the glass fibers can have a length of about 3.2 mm (or 1/8 inch).

The glass fibers used in select aspects of this disclosure may be surface-treated with a surface treatment agent containing a coupling agent to improve adhesion to the resin base. Suitable coupling agents can include, but are not limited to, silane-based coupling agents, titanate-based coupling agents or a mixture thereof. Applicable silane-based coupling agents include aminosilane, epoxysilane, amidesilane, azidesilane and acrylsilane. Organo metallic coupling agents, for example, titanium or zirconium-based organo metallic compounds, may also be used. In exemplary aspects, the glass fiber used in the disclosure may be selected from E-glass, S-glass, AR-glass, T-glass, D-glass R-glass, and combinations thereof. As an example, the glass fiber can be an "E" glass type which is a class of fibrous glass filaments comprised of lime-alumino-borosilicate glass.

The glass fiber may also be produced with various shapes. Glass fibers having a length of about 0.4 mm (millimeter) or longer are referred to long fibers, and fibers shorter than this are referred to as short fibers. The glass fiber may have a round, flat, or irregular cross-section. Thus, use of non-round fiber cross sections is possible. In a still further aspect, the long glass fiber has a circular cross-section. In a yet further aspect, the diameter of the long glass fiber is from about 1 to about 15 µm. The diameter of the glass fiber may be from about 4 to about 10 µm. The diameter of the glass fiber may be from about 1 to about 10 µm. In one aspect, the diameter of the glass fibers can be about 10 µm.

The glass fibers used in select aspects of this disclosure may be surface-treated with a surface treatment agent containing a coupling agent to improve adhesion to the resin base. Suitable coupling agents can include, but are not limited to, silane-based coupling agents, titanate-based coupling agents or a mixture thereof. Applicable silane-based coupling agents include aminosilane, epoxysilane, amidesilane, azidesilane and acrylsilane. Organo metallic coupling agents, for example, titanium or zirconium-based organo metallic compounds, may also be used. In exemplary aspects, the glass fiber used in the disclosure may be selected from E-glass, S-glass, AR-glass, T-glass, D-glass R-glass, and combinations thereof. As an example, the glass fiber can be an "E" glass type which is a class of fibrous glass filaments included of lime-alumino-borosilicate glass.

In certain aspects, the glass fiber may comprise a flat glass fiber. Flat glass fiber may refer to a glass fiber having a flat cross-section. A flat glass fiber may have an aspect ratio for the flat cross-section of 2 to 5 or from about 2 to about 5. For example, the flat cross-section glass may have a flat ratio of 4:1, and 2:1. Use of a flat glass fiber may further support flatness, warpage, of a molded part comprising the composition. To meet considerations with for example complex electronic components and their assembly, a PBT compound with both low flatness (low warpage) at desirable if not critical. The glass type itself can comprise of standard E-glass but also special NE-glass which has improved Dₖ/D_{f} performance which is a specific feature as demanded for wireless connectivity applications and autonomous driving systems relying on RADAR technologies. To compatibilize the glass filler with the polymer resin a non-specified coating/sizing can be applied to the glass, reducing the risk of having "floating" glass in referred to compounds. The present disclosure meets this need and others. With included flat glass fiber, the disclosed PBT compositions may thus have minimal warpage, more specifically, good planar flatness.

As noted herein, in certain examples the composition disclosed herein includes from 5 to 70 wt. %, or from about 5 to about 65 wt. %, or from 10 to 65 wt. %, or from about 10 to about 65 wt. % glass fiber. In other examples, the resin composition includes from 10 to 50 wt. %, or from about 10 to about 50 wt. % glass fiber, or 10 to 40 wt. %, from about 10 to about 40 wt. %, or from 10 to 30 wt. %, about 10 to about 30 wt. %, or even from 10 to 20 wt. %, or from about 10 to about 20 wt. % glass fiber.

### High Heat or Non-miscible Polymer

Aspects of the disclosure relate to a composition comprising a high heat polymer or a non-miscible polymer. A sufficiently high-heat polymer may have sufficient heat to retain mechanical properties of typical PBT materials. In various examples, the high heat polymer is a high heat polycarbonate. An appropriate non-miscible or immiscible polymer may maintain crystallinity of the base PBT resin.

As provided herein, the composition comprises a high heat polycarbonate copolymer. A polycarbonate material or mixture of materials, for example, as recited in U.S. Patent No. 7,786,246, which is hereby incorporated in its entirety for the specific purpose of disclosing various polycarbonate compositions and methods. The polycarbonate copolymer composition may be bisphenol based. For example, a high heat polycarbonate polymer, such as, for example, a polycarbonate comprising repeat units derived from a 3,3-bis(4-hydroxyphenyl)-2-phenylisoindolin-1-one (PPPBP), also referred to herein as a PPPBP containing polycarbonate (PPPBP- PC).

Another type of high heat polycarbonate that can be used includes a high heat carbonate group, optionally together with a low heat carbonate group. A combination of different high heat groups or low heat groups can be used. The low heat carbonate group can be derived from bisphenols of formula (C) wherein X^{a} is a C₁₋₁₈ bridging group. For example, X^{a} can be a C₃₋₆ cycloalkylidene, a C₁₋₆ alkylidene of the formula -C(R^{c})(R^{d}) - wherein R^{c} and R^{d} are each independently hydrogen, C₁₋₅ alkyl, or a group of the formula -C(=R^{e})- wherein R^{e} is a divalent C₁₋₅ hydrocarbon group.

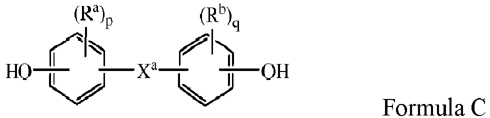

Some illustrative examples of dihydroxy compounds that can be used in the manufacture of the low heat monomer units are described, for example, in WO 2013/175448 A1, US 2014/0295363, and WO 2014/072923 . In an aspect, the low heat carbonate group is derived from bisphenol A, which provides the low heat group of the following formula (D).

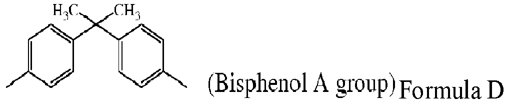

The high heat carbonate group is derived from a high heat bisphenol monomer. As used herein, a high heat bisphenol monomer is a monomer where the corresponding homopolycarbonate of the monomer has a glass transition temperature (Tg) of 170°C or higher, determined per ASTM D3418 with a 20 °C/min heating rate. Examples of such high heat bisphenol groups include groups of formulas (E) to (K). 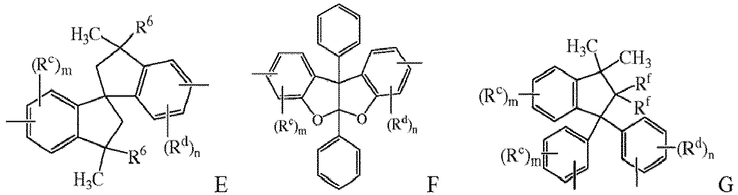 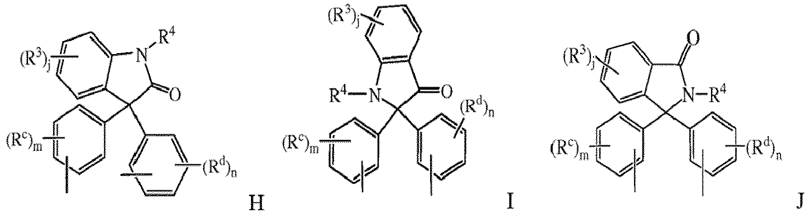 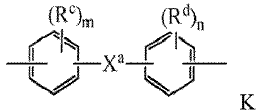 wherein R^{c} and R^{d} are each independently a C₁₋₁₂ alkyl, C₂₋₁₂ alkenyl, C₃₋₈ cycloalkyl, or C₁₋₁₂ alkoxy, each R^{f} is hydrogen or both R_{f} together are a carbonyl group, each R³ is independently C₁₋₆ alkyl, R⁴ is hydrogen, C₁₋₆ alkyl, or phenyl optionally substituted with 1-5 C₁₋₆ alkyl groups, each R⁶ is independently C₁₋₃ alkyl, or phenyl, methyl, X^{a} is a C₆₋₁₂ polycyclic aryl, C₃₋₁₈ mono-or polycycloalkylene, C₃₋₁₈ mono- or polycycloalkylidene, -C(R^{h})(R^{g})- wherein R^{h} is hydrogen, C₁₋₁₂ alkyl, or C₆₋₁₂ aryl and R^{g} is C₆₋₁₀ alkyl, C₆₋₈ cycloalkyl, or C₆₋₁₂ aryl, or - (Q¹)ₓ-G-(Q²)_{y}-wherein Q¹ and Q² are each independently a C₁₋₃ alkylene, G is a C₃₋₁₀ cycloalkylene, x is 0 or 1, and y is 1, and j, m and n are each independently 0-4, or 0 or 1. A combination of high heat bisphenol groups can be used.

In an aspect in formulas (6)-(12), R^{c} and R^{d} are each independently a C₁₋₃ alkyl, or C₁₋₃ alkoxy, each R⁶ is methyl, each R³ is independently C₁₋₃ alkyl, R⁴ is methyl, or phenyl, each R⁶ is independently C₁₋₃ alkyl or phenyl, methyl, X^{a} is a C₆₋₁₂ polycyclic aryl, C₃₋₁₈ mono- or polycycloalkylene, C₃₋₁₈ mono- or polycycloalkylidene, -C(R^{f})(R^{g})- wherein R^{f} is hydrogen, C₁₋₁₂ alkyl, or C₆₋₁₂ aryl and R^{g} is C₆₋₁₀ alkyl, C₆₋₈ cycloalkyl, or C₆₋₁₂ aryl, or - (Q¹)ₓ-G-(Q²)_{y}- group, wherein Q¹ and Q² are each independently a C₁₋₃ alkylene and G is a C₃₋₁₀ cycloalkylene, x is 0 or 1, and y is 0 or 1, and j, m, and n are each independently 0 or 1.

Suitable examples of high heat bisphenol groups are shown below 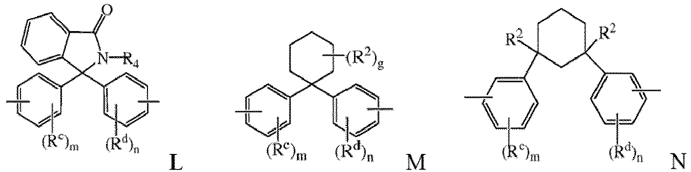 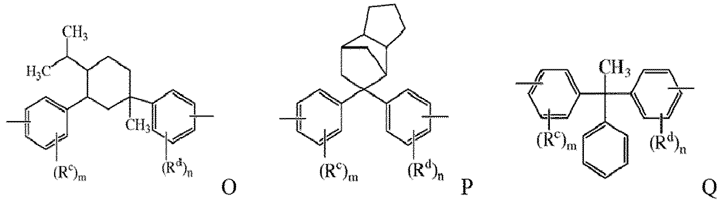 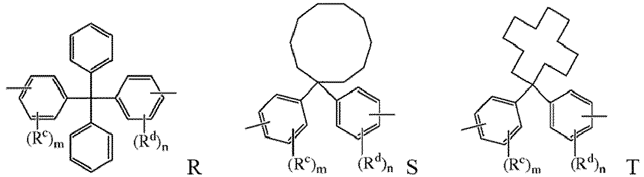 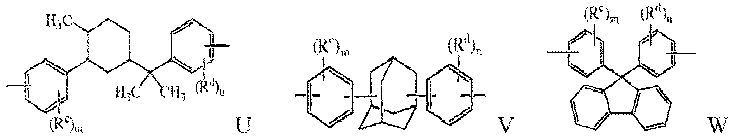 wherein R^{c} and R^{d} are the same as defined for formulas (6) to (12), each R² is independently C₁₋₄ alkyl, m and n are each independently 0-4, each R³ is independently C₁₋₄ alkyl or hydrogen, R⁴ is C₁₋₆ alkyl or phenyl optionally substituted with 1-5 C₁₋₆ alkyl groups, and g is 0-10. In a specific aspect each bond of the bisphenol group is located para to the linking group that is X^{a} In an aspect, R^{c} and R^{d} are each independently a C₁₋₃ alkyl, or C₁₋₃ alkoxy, each R² is methyl, x is 0 or 1, y is 1, and m and n are each independently 0 or 1.

The high heat bisphenol group may be of formula (X) or (Y) 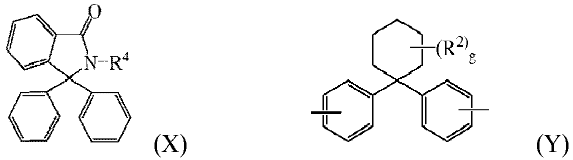 wherein R⁴ is methyl or phenyl, each R² is methyl, and g is 1-4. Preferably, the high heat bisphenol group is derived from N-phenyl phenolphthalein bisphenol (PPPBP, also known as 2-phenyl-3,3'-bis(4-hydroxyphenyl)) or from 1,1-bis(4-hydroxyphenyl)-3,3,5-trimethyl-cyclohexane (BP-TMC).

This high heat polycarbonate can include 0-90 mol%, or 10-80 mol% of low heat aromatic carbonate units, preferably bisphenol A carbonate units; and 10-100 mol%, preferably 20-90 mol% of high heat aromatic carbonate units, even more preferably wherein the high heat carbonate units are derived from 1,1-bis(4-hydroxyphenyl)-3,3,5-trimethyl-cyclohexane,, 4,4'-(1-phenylethylidene)bisphenol, 4,4'-(3,3-dimethyl-2,2-dihydro-1H-indene-1,1-diyl)diphenol, 1,1-bis(4-hydroxyphenyl)cyclododecane, 3,8-dihydroxy-5a,10b-diphenyl-coumarano-2',3',2,3-coumarane, or a combination thereof, wherein each amount is based on the total moles of the carbonate units, which sums to 100 mol%.

In certain aspects, the high heat polycarbonate includes 60-80 mol% of bisphenol A carbonate units and 20-40 mol% of high heat aromatic carbonate units derived from 1,1-bis(4-hydroxyphenyl)-3,3,5-trimethyl-cyclohexane, N-phenyl phenolphthalein bisphenol, or a combination thereof, wherein each amount is based on the total moles of the carbonate units, which sums to 100 mol%. The high heat polycarbonates comprising high heat carbonate units can have an Mw of 10,000-50,000 g/mol, or 16,000-300,000 g/mol, as measured by gel permeation chromatography (GPC), using a crosslinked styrene-divinylbenzene column and calibrated to bisphenol A homopolycarbonate references. GPC samples are prepared at a concentration of 1 mg per ml and are eluted at a flow rate of 1.5 ml per minute.

The composition may have a high glass transition temperature (T_{g}). The T_{g} of the high heat polycarbonates is 155 to 280 °C, or from about 165 to 260 °C, or from about 185 to 230 °C, determined by differential scanning calorimetry (DSC) as per ASTM D3418 with a 20 °C/min heating rate.

The high heat polycarbonates can have high heat resistance. The heat deflection temperature (HDT) of the high heat polycarbonates is 145 to 270 °C, more preferably 155 to 260 °C, even more preferably 175 to 220 °C, measured flat on a 80 x 10 x 4 millimeter (mm) bar with a 64 mm span at 0.45 MPa according to ISO 75/Bf. The high heat polycarbonates can have a high Vicat softening temperature. In an aspect, the high heat polycarbonates have a Vicat B120 of 150 to 275 °C, preferably 160 to 255 °C, even more preferably 180 to 225 °C, measured according to ISO 306.

The high heat polycarbonates are essentially free of certain metal ions, anions, and low molecular weight molecules (fewer than 150 grams per mol, g/mol). Such levels of these metal ions may further enhance the optical properties of the thermoplastic compositions. In an aspect, the copolycarbonates comprise less than 2 ppm of each of triethyl amine, calcium ions, magnesium ions, potassium ions, iron ions, and chloride ions.

In some aspects, the high heat polycarbonate copolymer is a copolymer including repeating units derived from bisphenol A. The polycarbonate may include polycarbonate monomers such as, but not limited to, 2-phenyl-3,3'-bis (4-hydroxy phenyl) phthalimidine (PPPBP).

High-heat polycarbonates may comprise polycarbonates having a glass transition temperature T_{g} of from 170 to 280 degrees Celsius (°C) and /or a crystalline melting point Tₘ from 200 to 400 °C. Preferably, the high heat polycarbonate has a glass transition temperature grater than 155 °C, preferably greater than 165 °C, even more preferably greater than 175 °C. Isoindolinone bisphenol homopolymers of PPP-BP and high PPP-BP content copolymers (for example, polycarbonates and polycarbonate copolymers) and isophorone bisphenol polycarbonates have a comparatively high T_{g} compared to polycarbonates such as bisphenol A polycarbonate (BPA-PC).

In yet further aspects, the composition may comprise a non-miscible polymer. That is, the polymer may be non-miscible or immiscible with the polyester phase of the present composition. Such a non-miscible polymer may retain crystallinity of the PBT phase. As such, the crystallinity may be a measure of non-miscibility of a given polymer for applicability in the present disclosure. Given a melt depression, two glass transition temperatures would be apparent where the polymer is immiscible or non-miscible with PBT.

Crystallinity may be measured using differential scanning calorimetry (DSC) as the melting enthalpy of a PBT based-composition, which melts at a particular temperature. Without intent to be bound by any particular theory, it is noted that the heat deflection temperature of a glass-filled PBT composition may depend upon the PBT: glass fiber ratio while the onset temperature of PBT melting is independent of the composition.

The high heat polycarbonates can be present in an amount of 10 wt.% to 99 wt.%, of 20 wt.% to 80 wt.%, of 40 wt.% to 70 wt.%, or of 50 wt.% to 70 wt.% based on the total weight of the compositions. As noted herein, in certain examples the composition disclosed herein includes from 0.01 wt. % to 50 wt. %, or from about 0.01 wt. % to about 45 wt. %, or from 0.1 wt. % to 50 wt. %, or from about 0.1 wt. % to about 45 wt. % of a high heat polymer or non-miscible polymer. In other examples, the composition includes from 2 wt. % to 25 wt. %, or from about 2 wt. % to about 15 wt. % of a high heat polymer or non-miscible polymer, or 3 wt. % to 15 wt. %, from about 3 wt. % to about 12 wt. %, or from 3 wt. % to 20 wt. %, about 2 wt. % to about 40 wt. %, or even from 3 wt. % to 40 wt. %, or from about 1 wt. % to about 15 wt. % of a high heat polymer or non-miscible polymer

### Additives

The disclosed thermoplastic composition can comprise one or more additives conventionally used in the manufacture of molded thermoplastic parts with the proviso that the optional additives do not adversely affect the desired properties of the resulting composition. Mixtures of optional additives can also be used. Such additives can be mixed at a suitable time during the mixing of the components for forming the composition mixture. Exemplary additives can include ultraviolet agents, ultraviolet stabilizers, heat stabilizers, antistatic agents, antimicrobial agents, anti-drip agents, radiation stabilizers, pigments, dyes, colorants, fibers, fillers, plasticizers, fibers, flame retardants, antioxidants, lubricants, wood, glass, and metals, and combinations thereof. According to certain aspects, the polymer compositions may maintain mechanical and dielectric performance even with high levels of fillers (for example, greater than 30 wt. % filler based on the total weight of the polymer composition).

The composition disclosed herein can comprise one or more additional fillers. The filler can be selected to impart additional impact strength and/or provide additional characteristics that can be based on the final selected characteristics of the polymer composition. In some aspects, the filler(s) can comprise inorganic materials which can include clay, titanium oxide, asbestos fibers, silicates and silica powders, boron powders, calcium carbonates, talc, kaolin, sulfides, barium compounds, metals and metal oxides, wollastonite, glass spheres, glass fibers, flaked fillers, fibrous fillers, natural fillers and reinforcements, and reinforcing organic fibrous fillers. In certain aspects, the composition may comprise a glass fiber filler. For example, the composition may comprise from about 0.01 wt. % to about 25 wt. %, from about 10 wt. % to about 25 wt. %, from about 15 wt. % to about 25 wt. %, of a glass fiber filler based on the total weight of the composition. In yet further aspects, the composition may be free or substantially free of a glass filler.

Appropriate fillers or reinforcing agents can include, for example, mica, clay, feldspar, quartz, quartzite, perlite, tripoli, diatomaceous earth, aluminum silicate (mullite), synthetic calcium silicate, fused silica, fumed silica, sand, boron-nitride powder, boron-silicate powder, calcium sulfate, calcium carbonates (such as chalk, limestone, marble, and synthetic precipitated calcium carbonates) talc (including fibrous, modular, needle shaped, and lamellar talc), wollastonite, hollow or solid glass spheres, silicate spheres, cenospheres, aluminosilicate or (armospheres), kaolin, whiskers of silicon carbide, alumina, boron carbide, iron, nickel, or copper, continuous and chopped carbon fibers or glass fibers, molybdenum sulfide, zinc sulfide, barium titanate, barium ferrite, barium sulfate, heavy spar, titanium dioxide, aluminum oxide, magnesium oxide, particulate or fibrous aluminum, bronze, zinc, copper, or nickel, glass flakes, flaked silicon carbide, flaked aluminum diboride, flaked aluminum, steel flakes, natural fillers such as wood flour, fibrous cellulose, cotton, sisal, jute, starch , lignin, ground nut shells, or rice grain husks, reinforcing organic fibrous fillers such as poly(ether ketone), polyimide, polybenzoxazole, poly(phenylene sulfide), polyesters, polyethylene, aromatic polyamides, aromatic polyimides, polyetherimides, polytetrafluoroethylene, and poly(vinyl alcohol), as well combinations comprising at least one of the foregoing fillers or reinforcing agents. The fillers and reinforcing agents may be coated, or surface treated, with silanes for example, to improve adhesion and dispersion with the polymer matrix. Fillers generally can be used in amounts of 1 to 200 parts by weight, based on 100 parts by weight of based on 100 parts by weight of the total composition.

In some aspects, the thermoplastic composition may comprise a synergist. In various examples fillers may serve as flame retardant synergists. The synergist facilitates an improvement in the flame retardant properties when added to the flame retardant composition over a comparative composition that contains all of the same ingredients in the same quantities except for the synergist. Examples of mineral fillers that may serve as synergists are mica, talc, calcium carbonate, dolomite, wollastonite, barium sulfate, silica, kaolin, feldspar, barytes, or the like, or a combination comprising at least one of the foregoing mineral fillers. Metal synergists, for example, antimony oxide, can also be used with the flame retardant. In one example, the synergist may comprise magnesium hydroxide and phosphoric acid. The mineral filler may have an average particle size of about 0.1 to about 20 micrometers, specifically about 0.5 to about 10 micrometers, and more specifically about 1 to about 3 micrometers.

The thermoplastic composition can comprise an antioxidant. The antioxidants can include either a primary or a secondary antioxidant. For example, antioxidants can include organophosphites such as tris(nonyl phenyl)phosphite, tris(2,4-di-t-butylphenyl)phosphite, bis(2,4-di-t-butylphenyl)pentaerythritol diphosphite, distearyl pentaerythritol diphosphite or the like; alkylated monophenols or polyphenols; alkylated reaction products of polyphenols with dienes, such as tetrakis[methylene(3,5-di-tert-butyl-4-hydroxyhydrocinnamate)] methane, or the like; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate or the like; amides of beta-(3,5-di-tert-butyl-4-hydroxyphenyl)-propionic acid or the like, or combinations including at least one of the foregoing antioxidants. Antioxidants can generally be used in amounts of from 0.01 to 0.5 parts by weight, based on 100 parts by weight of the total composition, excluding any filler.

In various aspects, the thermoplastic composition can comprise a mold release agent. Exemplary mold releasing agents can include for example, metal stearate, stearyl stearate, pentaerythritol tetrastearate, beeswax, montan wax, paraffin wax, or the like, or combinations including at least one of the foregoing mold release agents. Mold releasing agents are generally used in amounts of from about 0.1 to about 1.0 parts by weight, based on 100 parts by weight of the total composition, excluding any filler.

In an aspect, the thermoplastic composition can comprise a heat stabilizer. As an example, heat stabilizers can include, for example, organo phosphites such as triphenyl phosphite, tris-(2,6-dimethylphenyl)phosphite, tris-(mixed mono-and di-nonylphenyl)phosphite or the like; phosphonates such as dimethylbenzene phosphonate or the like, phosphates such as trimethyl phosphate, or the like, or combinations including at least one of the foregoing heat stabilizers. Heat stabilizers can generally be used in amounts of from 0.01 to 0.5 parts by weight based on 100 parts by weight of the total composition, excluding any filler.

In further aspects, light stabilizers can be present in the thermoplastic composition. Exemplary light stabilizers can include, for example, benzotriazoles such as 2-(2-hydroxy-5-methylphenyl)benzotriazole, 2-(2-hydroxy-5-tert-octylphenyl)-benzotriazole and 2-hydroxy-4-n-octoxy benzophenone or the like or combinations including at least one of the foregoing light stabilizers. Light stabilizers can generally be used in amounts of from about 0.1 to about 1.0 parts by weight, based on 100 parts by weight of the total composition, excluding any filler. The thermoplastic composition can also comprise plasticizers. For example, plasticizers can include phthalic acid esters such as dioctyl-4,5-epoxy-hexahydrophthalate, tris-(octoxycarbonylethyl) isocyanurate, tristearin, epoxidized soybean oil or the like, or combinations including at least one of the foregoing plasticizers. Plasticizers are generally used in amounts of from about 0.5 to about 3.0 parts by weight, based on 100 parts by weight of the total composition, excluding any filler.

Ultraviolet (UV) absorbers can also be present in the disclosed thermoplastic composition. Exemplary ultraviolet absorbers can include for example, hydroxybenzophenones; hydroxybenzotriazoles; hydroxybenzotriazines; cyanoacrylates; oxanilides; benzoxazinones; 2-(2H-benzotriazol-2-yl)-4-(1,1,3,3-tetramethylbutyl)-phenol (CYASORB^{™} 5411); 2-hydroxy-4-n-octyloxybenzophenone (CYASORB^{™} 531); 2-[4,6-bis(2,4-dimethylphenyl)-1,3,5-triazin-2-yl]-5-(octyloxy)-phenol (CYASORB^{™} 1164); 2,2'-(1,4-phenylene)bis(4H-3,1-benzoxazin-4-one) (CYASORB^{™} UV- 3638); 1,3-bis[(2-cyano-3,3-diphenylacryloyl)oxy]-2,2-bis[[(2-cyano-3, 3-diphenylacryloyl)oxy]methyl]propane (UVINUL^{™} 3030); 2,2'-(1,4-phenylene) bis(4H-3,1-benzoxazin-4-one); 1,3-bis[(2-cyano-3,3-diphenylacryloyl)oxy] -2,2-bis[[(2-cyano-3,3-diphenylacryloyl)oxy]methyl]propane; nano-size inorganic materials such as titanium oxide, cerium oxide, and zinc oxide, all with particle size less than 100 nanometers; or the like, or combinations including at least one of the foregoing UV absorbers. UV absorbers are generally used in amounts of from 0.01 to 3.0 parts by weight, based on 100 parts by weight of the total composition, excluding any filler.

The thermoplastic composition can further comprise a lubricant. As an example, lubricants can include for example, fatty acid esters such as alkyl stearyl esters, e.g., methyl stearate or the like; mixtures of methyl stearate and hydrophilic and hydrophobic surfactants including polyethylene glycol polymers, polypropylene glycol polymers, and copolymers thereof for example, methyl stearate and polyethylene-polypropylene glycol copolymers in a suitable solvent; or combinations including at least one of the foregoing lubricants. Lubricants can generally be used in amounts of from about 0.1 to about 5 parts by weight, based on 100 parts by weight of the total composition, excluding any filler.

Anti-drip agents can also be used in the composition, for example a fibril forming or non-fibril forming fluoropolymer such as polytetrafluoroethylene (PTFE). The anti-drip agent can be encapsulated by a rigid copolymer, for example styrene-acrylonitrile copolymer (SAN). PTFE encapsulated in SAN is known as TSAN. In one example, TSAN can comprise 50 wt. % PTFE and 50 wt. % SAN, based on the total weight of the encapsulated fluoropolymer. The SAN can comprise, for example, 75 wt. % styrene and 25 wt. % acrylonitrile based on the total weight of the copolymer. An anti-drip agent, such as TSAN, can be used in amounts of 0.1 to 10 parts by weight, based on 100 parts by weight of the total composition, excluding any filler.

As an example, the disclosed composition can comprise an impact modifier. The impact modifier can be a chemically reactive impact modifier. By definition, a chemically reactive impact modifier can have at least one reactive group such that when the impact modifier is added to a polymer composition, the impact properties of the composition (expressed in the values of the IZOD impact) are improved. In some examples, the chemically reactive impact modifier can be an ethylene copolymer with reactive functional groups selected from, but not limited to, anhydride, carboxyl, hydroxyl, and epoxy.

In further aspects of the present disclosure, the composition can comprise a rubbery impact modifier. The rubber impact modifier can be a polymeric material which, at room temperature, is capable of recovering substantially in shape and size after removal of a force. However, the rubbery impact modifier should typically have a glass transition temperature of less than 0 °C. In certain aspects, the glass transition temperature (T_{g}) can be less than -5° C, -10° C, -15° C, with a T_{g} of less than -30° C typically providing better performance. Representative rubbery impact modifiers can include, for example, functionalized polyolefin ethylene-acrylate terpolymers, such as ethylene-acrylic esters-maleic anhydride (MAH) or glycidyl methacrylate (GMA). The functionalized rubbery polymer can optionally contain repeat units in its backbone which are derived from an anhydride group containing monomer, such as maleic anhydride. In another scenario, the functionalized rubbery polymer can contain anhydride moieties which are grafted onto the polymer in a post polymerization step.

Optionally, the composition of the present disclosure further includes a colorant, specifically either one or more colorants that do not absorb substantially in the NIR (800-1500 nm) from which a colored laser transmitting article can be molded, or one or more laser absorbing colorants from which a laser absorbing article can be molded. Suitable examples of laser-transparent colored compositions including black can be manufactured through a selection and combination of colorants generally available in the art including but not limited to anthraquinone, perinone, quinoline, perylene, methane, coumarin, phthalimide, isoindoline, quinacridone and azomethine based dyes.

### Articles of manufacture

In certain aspects, the present disclosure pertains to shaped, formed, or molded articles including the thermoplastic compositions. The thermoplastic compositions can be molded into useful shaped articles by a variety of means as described below.

Articles formed from thermoplastic compositions according to the present disclosure may include, but are not limited to, a housing, enclosure or internal structural component for: a speaker for a cellular communication device; a smart watch; a hand-held portable smart device; an energy storage device; a communication device; a computer device; an electromagnetic interference device; a printed circuit; a Wi-Fi device; a Bluetooth device; a GPS device; a cellular antenna device; a smart phone device; a wireless communication device; a structured media enclosure; an antenna concealing enclosure; an enclosure for networking equipment; a structural component of an electronic device; a portable computing device; a hand-held electronic device; an automotive device; a medical device; a sensor device; a security device; a shielding device; an RF antenna device; a light emitting diode LED device; or an RFID device.

In particular aspects the article is for example, but not limited to, a box or a cover in a general sense, which may be used as for example RADAR housing, a speaker housing for a wireless communication device, a housing for a smart watch, a housing for a hand-held portable smart device, a flashlight, lighting housing, lighting fixtures, water tight enclosures, a walkie-talkie, building construction materials, automotive parts, E-bike controllers, or a housing for an energy storage device; such as battery packs. The wireless communication device may include a smart phone or tablet, but also antenna housings, Wi-Fi communication housing. The energy storage device may include a battery. In certain aspects, the compositions may be useful as structural parts.

### Methods for making articles including the thermoplastic compositions

Aspects of the disclosure further relate to methods for making a composition including a thermoplastic polymer component. In many aspects, the compositions can be prepared according to a variety of methods. The compositions of the present disclosure can be blended, compounded, or otherwise combined with the aforementioned ingredients by a variety of methods involving intimate admixing of the materials with any additional additives desired in the formulation. Because of the availability of melt blending equipment in commercial polymer processing facilities, melt processing methods can be used. In various further aspects, the equipment used in such melt processing methods can include, but is not limited to, co-rotating and counter-rotating extruders, single screw extruders, co-kneaders, disc-pack processors and various other types of extrusion equipment. In a further aspect, the extruder is a twin-screw extruder. In various further aspects, the composition can be processed in an extruder at temperatures from about 180 °C to about 350 °C, particularly 250 °C to 300 °C.

Methods may further comprise processing the composition to provide a plaque of a desired thickness. Plaques can be extruded, injection molded, compression molded, or injection-compression molded, and may have a thickness between about 0.5 mm and 6 mm. Other processes could also be applied to the thin thermoplastic film, including but not limited to, lamination, co-extrusion, thermo-forming or hot pressing. In such aspects, further layers of other materials (for example, other thermoplastic polymer layers, metallic layers, etc.) could be combined with the composition.

The extruders used in the disclosure may have a single screw, multiple screws, intermeshing co-rotating or counter rotating screws, non-intermeshing co-rotating or counter rotating screws, reciprocating screws, conical screws, screws with pins, screws with screens, barrels with pins, rolls, rams, helical rotors, co-kneaders, disc-pack processors, various other types of extrusion equipment, or combinations including at least one of the foregoing. In particular aspects the extruder is a co-rotating twin-screw extruder. The mixture including the foregoing mentioned components may be subject to multiple blending and forming steps if desirable. For example, the thermoplastic composition may first be extruded and formed into pellets. The pellets may then be fed into a molding machine where it may be formed into any desirable shape or product. Alternatively, the thermoplastic composition emanating from a single melt blender may be formed into sheets or strands and subjected to post-extrusion processes such as annealing, uniaxial or biaxial orientation.

Thermoplastic compositions formed according to the methods described herein - and articles formed therefrom - can have any of the components and properties described above. Articles including the thermoplastic compositions according to aspects described herein may be formed according to any conventional method. In some aspects the article is extrusion-molded, injection-molded, compression-molded, thermoformed, over molded, or insert-molded with a metallic or composite laminate insert.

If extrusion-molded, the one or any foregoing components described herein may first be dry blended together, then fed into an extruder from one or multi-feeders, or separately fed into an extruder from one or multi-feeders. The one or any foregoing components may be first dry blended with each other, or dry blended with any combination of foregoing components, then fed into an extruder from one or multi-feeders, or separately fed into an extruder from one or multi-feeders. The components may be fed into the extruder from a throat hopper or any side feeders. Various combinations of elements of this disclosure are encompassed by this disclosure, e.g., combinations of elements from dependent claims that depend upon the same independent claim.

### Aspects of the Disclosure

In various aspects, the present disclosure pertains to and includes at least the following aspects. Aspect 1. A thermoplastic composition comprising: from about 0.01 wt. % to about 90 wt. % of a polyalkylene terephthalate; from about greater than 0 wt. % to about 50 wt. % of a glass fiber; and from about 0.01 wt. % to about 45 wt. % of a high heat polycarbonate, wherein the high heat polycarbonate has a glass transition temperature greater than the glass transition temperature of a bisphenol A polycarbonate homopolymer; wherein the thermoplastic composition exhibits laser transmission between 20% and 80% of incident laser light at a wavelength of 980 nm at 1 millimeter thickness when measured pursuant to DVS Regulation 2243, wherein the combined weight percent value of all components does not exceed 100 wt. %, and all weight percent values are based on the total weight of the composition.

Aspect 2. The thermoplastic composition according to aspect 1, wherein the thermoplastic composition exhibits less warpage than a reference composition in the absence of the glass fiber and wherein the reference composition comprises the polyalkylene terephthalate and the high heat polycarbonate.

Aspect 3. The thermoplastic composition according to any one of aspects 1-2, wherein the thermoplastic composition exhibits a heat deflection temperature of less than 200 °C at 1.8 MPa when tested in accordance with ISO 75/Af at 1.8 MPa.

Aspect 4. The thermoplastic composition according to any one of aspects 1-3, wherein the thermoplastic composition maintains a crystallinity comparable to the crystallinity of a reference composition in the absence of the high heat polymer, wherein the reference composition comprises the polyalkylene terephthalate and the glass fiber wherein crystallinity is measured using differential scanning calorimetry.

Aspect 5. The thermoplastic composition according to any one of aspects 1-3, wherein the thermoplastic composition exhibits a crystallinity within 10% of the crystallinity of a reference composition in the absence of the high heat polymer, wherein the reference composition comprises the polyalkylene terephthalate and the glass fiber wherein crystallinity is measured using differential scanning calorimetry.

Aspect 6. The thermoplastic composition according to any one of aspects 1-5, wherein the polyalkylene terephthalate comprises a poly(butylene terephthalate) homopolymer, a poly(ethylene terephthalate) homopolymer, a poly(cyclohexylenedimethylene terephthalate) homopolymer, a poly(butylene terephthalate) copolymer, a poly(ethylene terephthalate) copolymer, a poly(cyclohexylenedimethylene terephthalate) copolymer.

Aspect 7. The thermoplastic composition according to any one of aspects 1-6, wherein the polyalkylene terephthalate comprises polybutylene terephthalate.

Aspect 8. The thermoplastic composition according to any one of aspects 1-6, wherein the polyalkylene terephthalate is post-consumer or post-industrial PBT.

Aspect 9. The thermoplastic composition according to any one of aspects 1-8, wherein the high heat polymer comprises bisphenol A carbonate units and 2-phenyl-3,3'-bis(4-hydroxyphenyl) phthalimidine carbonate units.

Aspect 10. The thermoplastic composition according to any one of aspects 1-8, wherein the high heat polymer comprises at least 25 mol% -phenyl-3,3'-bis(4-hydroxyphenyl) phthalimidine carbonate units.

Aspect 11. The thermoplastic composition according to any one of aspects 1-8, wherein the high heat polymer comprises at least 30 mol% -phenyl-3,3'-bis(4-hydroxyphenyl) phthalimidine carbonate units.

Aspect 12A. The thermoplastic composition according to any one of aspects 1-11, comprising from about 15 wt. % to 40 wt. % of the glass fiber.

Aspect 12B. The thermoplastic composition according to any one of aspects 1-11, comprising from about 15 wt. % to 40 wt. % of the glass fiber, wherein the glass fiber is a flat glass fiber.

Aspect 13. The thermoplastic composition according to any one of aspects 1-12B, wherein the thermoplastic composition further comprises at least one additional additive, wherein the at least one additional additive comprises a filler, acid scavenger, anti-drip agent, antioxidant, antistatic agent, chain extender, colorant, de-molding agent, flow promoter, lubricant, mold release agent, plasticizer, quenching agent, flame retardant, UV reflecting additive, and combinations thereof.

Aspect 14. An article formed from the thermoplastic composition according to any one of aspects 1 to 13.

Aspect 15. The article according to aspect 14, wherein the article is a component of a laser welded device or housing.

Aspect 16. A thermoplastic composition comprising: from about 0.01 wt. % to about 90 wt. % of a polyalkylene terephthalate; from about greater than 0 wt. % to about 50 wt. % of a glass fiber; and from about 0.01 wt. % to about 45 wt. % of a non-miscible polymer that retains greater than about 75% of PBT crystallinity as measured by melting enthalpy by DSC in first heating run after injection molding, wherein the thermoplastic composition exhibits laser transmission between 20% and 80% of incident laser light at a wavelength of 980 nm at 1 millimeter thickness when measured pursuant to DVS Regulation 2243.

Aspect 17. The thermoplastic composition according to aspect 16, wherein the thermoplastic composition exhibits less warpage than a reference composition in the absence of the glass fiber and wherein the reference composition comprises the polyalkylene terephthalate and the high heat polymer.

Aspect 18. A thermoplastic composition comprising: from about 0.01 wt. % to about 90 wt. % of a polyalkylene terephthalate; from about greater than 0 wt. % to about 50 wt. % of a glass fiber; and from about 0.01 wt. % to about 45 wt. % of a non-miscible polymer, wherein the thermoplastic composition exhibits laser transmission between 20% and 80% of incident laser light at a wavelength of 980 nm at 1 millimeter thickness when measured pursuant to DVS Regulation 2243 and wherein an injection molded sample of the thermoplastic composition exhibits an enthalpy of fusion that is within 5% of the enthalpy of fusion of a reference composition comprising PBT and glass fiber as measured by Melting enthalpy by DSC in first heating run after injection molding.

Aspect 19. The thermoplastic composition according to aspect 18, wherein the thermoplastic composition exhibits less warpage than a reference composition in the absence of the glass fiber and wherein the reference composition comprises the polyalkylene terephthalate and the high heat polymer.

Aspect 20. A thermoplastic composition comprising: from about 0.01 wt. % to about 90 wt. % of a polyalkylene terephthalate; and from about 0.01 wt. % to about 45 wt. % of a high heat polycarbonate, wherein the high heat polycarbonate has a glass transition temperature greater than the glass transition temperature of a bisphenol A polycarbonate homopolymer; wherein the thermoplastic composition exhibits laser transmission between 20% and 80% of incident laser light at a wavelength of 980 nm at 1 millimeter thickness when measured pursuant to DVS Regulation 2243, wherein the combined weight percent value of all components does not exceed 100 wt. %, and all weight percent values are based on the total weight of the composition.

### EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt %. There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

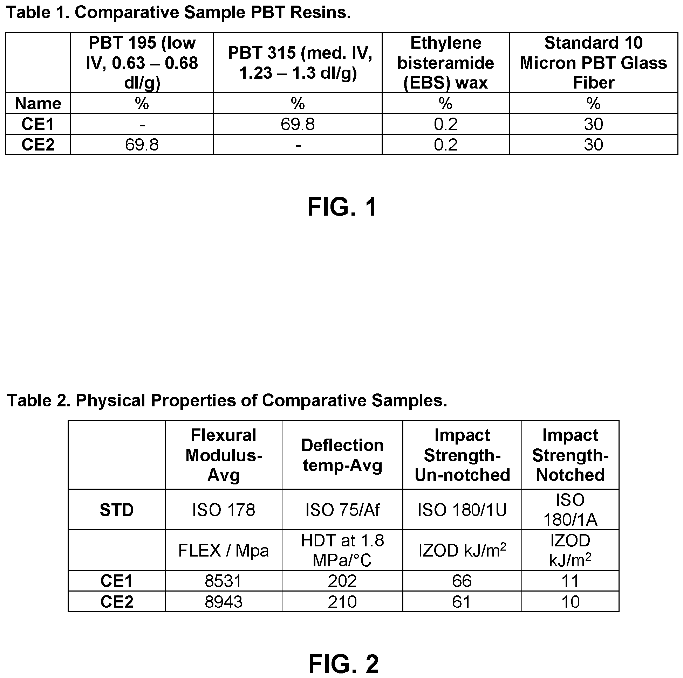

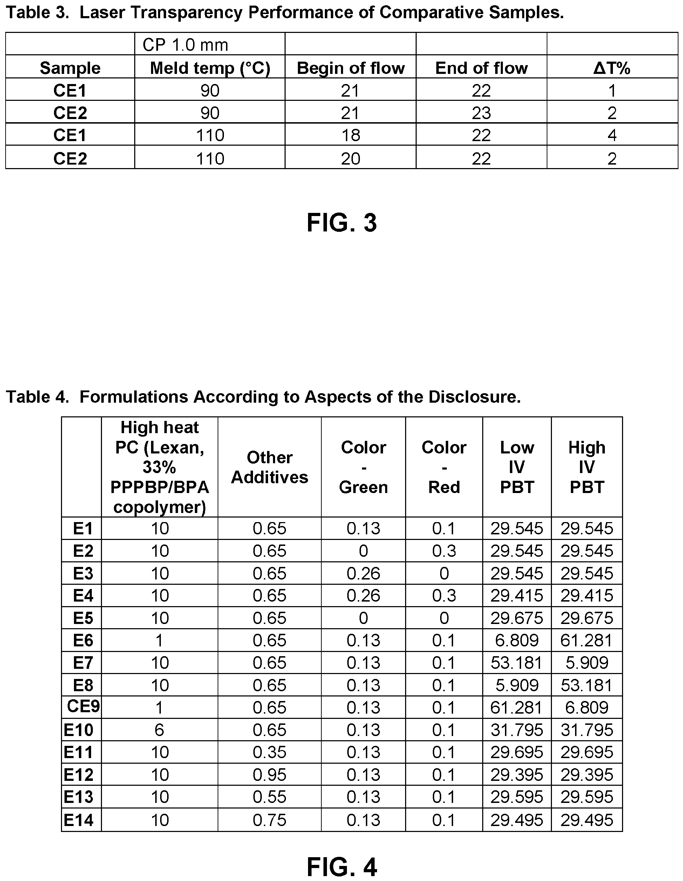

Table 1 (FIG. 1) presents comparative examples of polybutylene resins with 30 wt. % glass fiber. Physical properties are presented in Table 2 (FIG. 2). The comparative compositions exhibit 20% laser transmission, a heat deflection temperature of 202 °C to 210 °C, an unnotched Izod impact strength of 61-66 kJ/m², and a notched impact of 10-11 kJ/m². Table 3 (shown in FIG. 3) shows the laser transparency data for laser transmittance at a wavelength of 980 nm on samples at a thickness of 1 millimeter when measured pursuant to DVS Regulation 2243. Further examples including high heat polycarbonate copolymer are presented in Table 4 (shown in FIG. 4). The high heat polycarbonate is a PPPBP copolymer, specifically PPP-BP (N-phenylphenolphthaleinylbisphenol, 2,2-bis(4-hydro) - bisphenol A polycarbonate copolymer (33 mol % PPP-BP, molecular weight Mw of 21-25 kDa as determined by GPC using bisphenol A polycarbonate standards, para-cumylphenol (PCP) end-capped). Low intrinsic viscosity PBT refers to PBT 195 having a molecular weight of 66,000 g/mol using polystyrene standards. High intrinsic viscosity PBT refers to PBT 315 having a molecular weight of 115,000 g/mol using polystyrene standards.

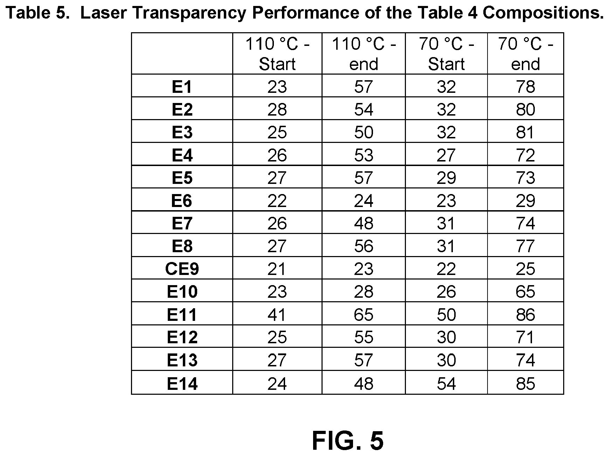

***Laser transparency.*** Laser transparency measurements for samples E1 to E8, comparative example 9 (CE), and E10 through E14 are presented in Table 5 (shown in FIG. 5).

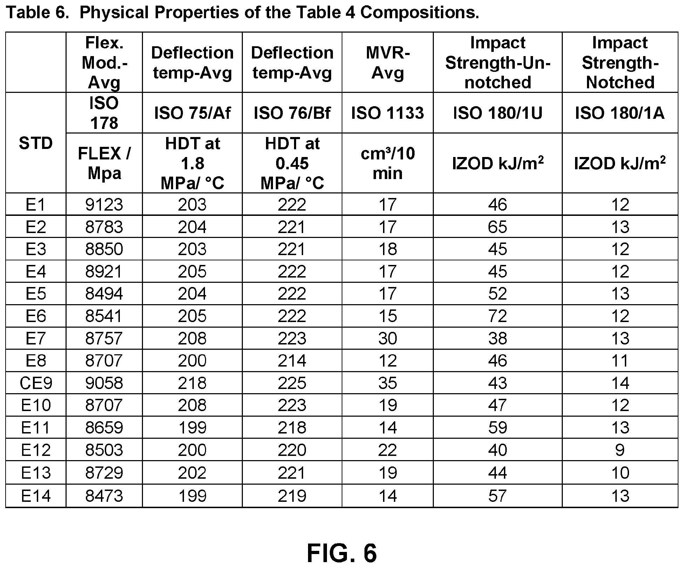

***Physical properties.*** Physical properties are presented in Table 6 (shown in FIG. 6). The differences in additive amounts were not believed to affect the crystallinity and warpage behavior of the compositions.

***Crystallinity.*** It is known in the art that there are a number of different ways to induce transparency in semi-crystalline materials. See, for example, Yunyin Lin, Emiliano Bilotti, Cees W.M. Bastiaansen, Ton Peijs. Transparent semi-crystalline polymeric materials and their nanocomposites: A review. First published: 07 August 2020. The suppression of crystallinity is undesirable from a chemical resistance point of view. As such, the disclosed compositions proved very desirable as they do not compromise or diminish crystallinity of the polymer system. See, for example, Lin, Y., Bilotti E., Bastiaansen C., and Peijs T., "Transparent semi-crystalline polymeric materials and their nanocomposites: A review." Polymer Engineering and Science, Vol. 60(10), October 2020, pages 2351-2376.

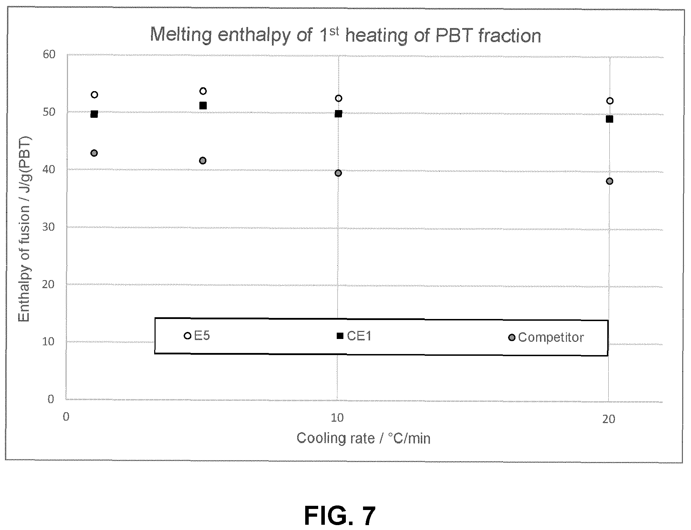

Crystallinity properties as evidenced by the enthalpy of fusion (joules per gram PBT; J/g PBT) were observed for the present compositions. The average enthalpy of fusion for standard PBT has been reported to be 52 J/g. See, for example, Furushima, Y., Kumazawa S., Umetsu, H., Toda A., Zhuravlev, E., Wurm A., and Schick, C. "Crystallization kinetics of poly(butylene terephthalate) and its talc composites." Journal of Applied Polymer Science, Volume 134(16), April 20, 2017. This value is consistent with those observed herein shown below. FIG. 7 shows the enthalpy of fusion as a function of the cooling rate (°C per minute) of first heating of PBT fraction for CE1, E5, and a Competitor (30 wt. % glass-filled PBT, advertised as configured for laser transparency). It was apparent that the crystallinity of the incorporated amount of PBT is similar for the low transparent 30% GF-PBT commercially available (CE1 and CE2) standard compared to the compound containing 10 wt.% of high heat polycarbonate (PPPBP-BPA copolymer). The Melting Enthalpy is corrected to represent the amount of actual PBT resin in the compound; viz. 70% by weight for the reference compound, and 60% for the improved compound. As shown, the melting enthalpies of CE1 and E5 are comparable in that their values nearly overlap. This behavior signified that the crystallization of PBT was not hampered by the addition of a high heat polymer. Whereas for a competitor grade, reported as a 30% glass filled PBT, a diminished melting enthalpy was found; from which a reduction in PBT crystallinity was concluded.

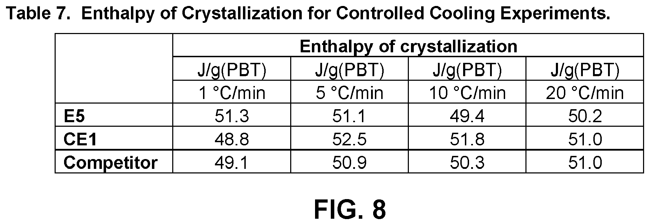

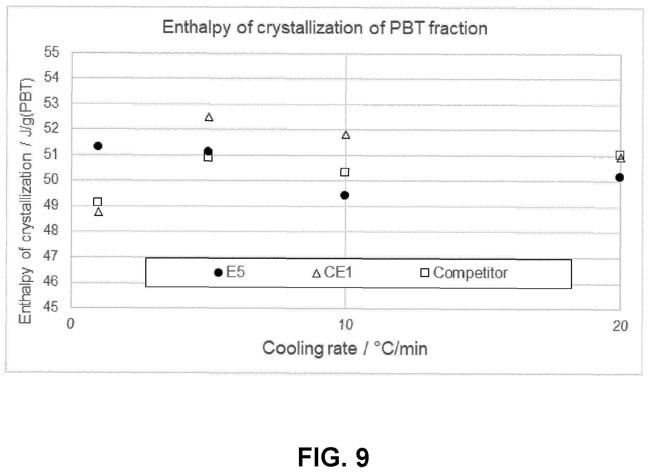

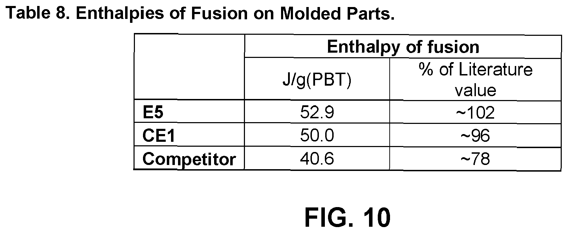

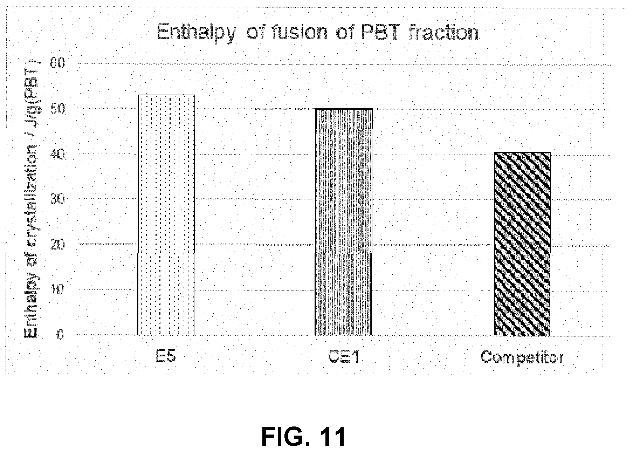

Table 7 (FIG. 8) shows the observed enthalpies of crystallization of the PBT fraction for the samples. These were observed according to controlled or gradual cooling experiments at 1 °C/min, 5 °C/min, 10 °C/min, and 20 °C/min. FIG. 9 shows the enthalpy of crystallization of the PBT fraction at the varying cooling rates. Values for the enthalpy of fusion of the injection molded parts were also obtained and are presented in Table 8 (shown in FIG. 10). Rather than as part of a process of gradual or controlled cooling, these values were obtained on injection molded specimens of the compositions. The injection molded process is more consistent with typical manufacturing processes than the gradual cooling method. Table 8 also presents the percent of the value from the literature value for PBT enthalpy of fusion (namely, 52 J/g PBT). FIG. 11 provides a graphical representation of the enthalpies observed. The Enthalpy of Fusion of the injection molded parts revealed that for the inventive samples, the PBT crystallinity level was retained; whereas for the competitor sample, a lowered crystallinity was observed. These values are scaled to the amount of PBT present in the composition. From the crystallization enthalpy of the same samples at different cooling speeds it appeared that there is agreement with the amount of crystallinity obtained when cooling is a controlled in a "slow" fashion. In this instance, the competitor sample regains typical PBT crystallinity.

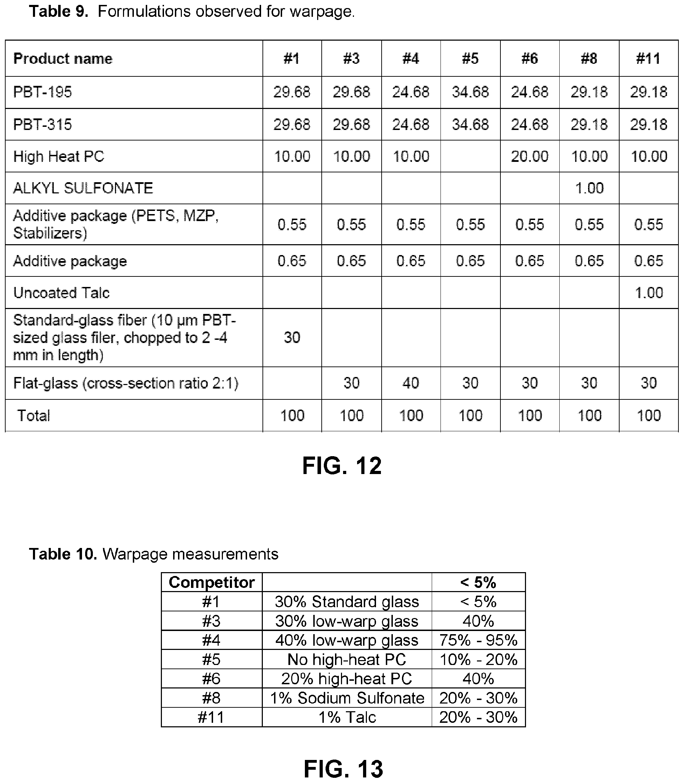

***Warpage.*** Warpage behavior was observed for formulations as shown in Table 9 (FIG. 12). Samples were evaluated at a threshold of 0.3 mm.
Warpage values are presented in Table 10 (shown in FIG. 13). When comparing the warpage of standard compounds having 'Standard' glass or 'flat glass' fiber, up to 75% - 95% of the plaque volume falls within a tolerance of 0.3 mm (for a 1.0 mm x 60 mm x 60 mm plaque). This suggests that by using a special type of glass filler, the aforementioned concerns related to warpage can be contained. When comparing #3 and #5 the incorporation of high-heat PC also improved the warpage further.

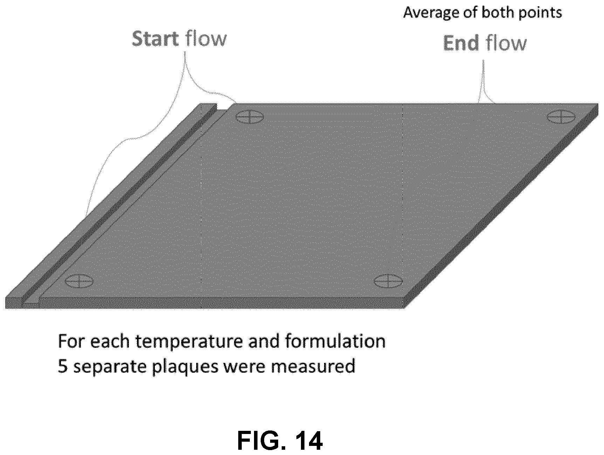

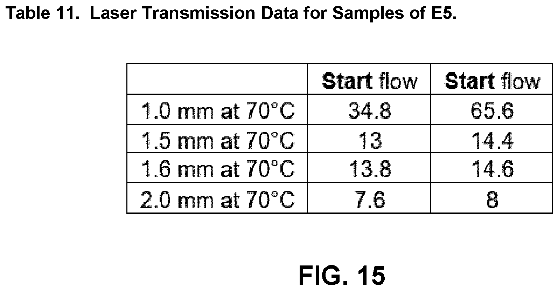

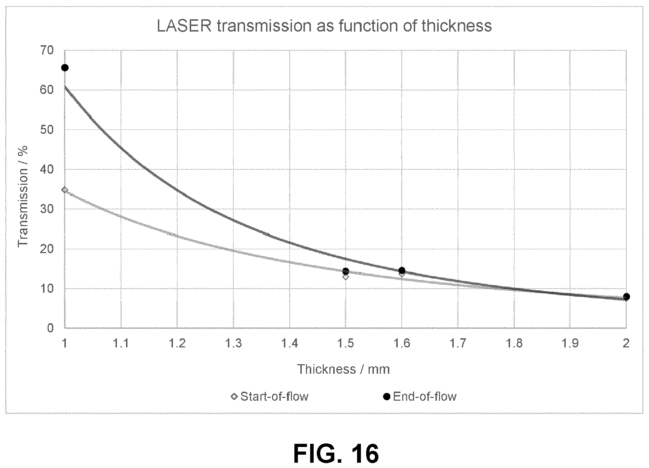

***Laser Transmission* (*molded plaques*)*.*** Further, for molding plaques formed from the disclosed composition (which have improved laser transmission), a gradient over the longitudinal flow direction is observed. Without being bound to any particular theory, the gradient is attributed to different cooling rates of the material being in effect. The results provided herein are determined according to FIG. 14 which elaborates on how laser transmission was measured on plaques formed from the disclosed compositions. Table 11 (shown in FIG. 15) presents the transmission of samples of E5 as a function of thickness. FIG. 16 provides a graphical representation of this data. The data illustrates laser transmission decreased as the thickness of the molded part increased. As such, the inventive E5 samples appeared more suitable for laser transmission for thinner parts.

The above description is intended to be illustrative, and not restrictive. For example, the above-described examples (or one or more aspects thereof) may be used in combination with each other. Other aspects can be used, such as by one of ordinary skill in the art upon reviewing the above description. The Abstract is provided to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed aspect. Thus, the following claims are hereby incorporated into the Detailed Description as examples or aspects, with each claim standing on its own as a separate aspect, and it is contemplated that such aspects can be combined with each other in various combinations or permutations. The scope of the disclosure should be determined with reference to the appended claims, along with the full scope of equivalents to which such claims are entitled.

## Claims

1. A thermoplastic composition comprising:
a. from about 0.01 wt. % to about 90 wt. % of a polyalkylene terephthalate;
b. from about greater than 0 wt. % to about 50 wt. % of a glass fiber; and
c. from about 0.01 wt. % to about 45 wt. % of a high heat polycarbonate, wherein the high heat polycarbonate has a glass transition temperature greater than the glass transition temperature of a bisphenol A polycarbonate homopolymer;
wherein the thermoplastic composition exhibits laser transmission between 20% and 80% of incident laser light at a wavelength of 980 nm at 1 millimeter thickness when measured pursuant to DVS Regulation 2243, wherein the combined weight percent value of all components does not exceed 100 wt. %, and all weight percent values are based on the total weight of the composition.

2. The thermoplastic composition according to claim 1, wherein the thermoplastic composition exhibits less warpage than a reference composition in the absence of the glass fiber and wherein the reference composition comprises the polyalkylene terephthalate and the high heat polycarbonate.

3. The thermoplastic composition according to any one of claims 1-2, wherein the thermoplastic composition exhibits a heat deflection temperature of less than 200 °C at 1.8 MPa when tested in accordance with ISO 75/Af at 1.8 MPa.

4. The thermoplastic composition according to any one of claims 1-3, wherein the thermoplastic composition maintains a crystallinity comparable to the crystallinity of a reference composition in the absence of the high heat polymer, wherein the reference composition comprises the polyalkylene terephthalate and the glass fiber wherein crystallinity is measured using differential scanning calorimetry.

5. The thermoplastic composition according to any one of claims 1-3, wherein the thermoplastic composition exhibits a crystallinity within 10% of the crystallinity of a reference composition in the absence of the high heat polymer, wherein the reference composition comprises the polyalkylene terephthalate and the glass fiber wherein crystallinity is measured using differential scanning calorimetry.

6. The thermoplastic composition according to any one of claims 1-5, wherein the polyalkylene terephthalate comprises a poly(butylene terephthalate) homopolymer, a poly(ethylene terephthalate) homopolymer, a poly(cyclohexylenedimethylene terephthalate) homopolymer, a poly(butylene terephthalate) copolymer, a poly(ethylene terephthalate) copolymer, a poly(cyclohexylenedimethylene terephthalate) copolymer.

7. The thermoplastic composition according to any one of claims 1-6, wherein the polyalkylene terephthalate comprises polybutylene terephthalate.

8. The thermoplastic composition according to any one of claims 1-6, wherein the polyalkylene terephthalate is post-consumer or post-industrial PBT.

9. The thermoplastic composition according to any one of claims 1-8, wherein the high heat polymer comprises bisphenol A carbonate units and 2-phenyl-3,3'-bis(4-hydroxyphenyl) phthalimidine carbonate units.

10. The thermoplastic composition according to any one of claims 1-8, wherein the high heat polymer comprises at least 25 mol% -phenyl-3,3'-bis(4-hydroxyphenyl) phthalimidine carbonate units.

11. The thermoplastic composition according to any one of claims 1-8, wherein the high heat polymer comprises at least 30 mol% -phenyl-3,3'-bis(4-hydroxyphenyl) phthalimidine carbonate units.

12. The thermoplastic composition according to any one of claims 1-11, comprising from about 15 wt. % to 40 wt. % of the glass fiber.

13. The thermoplastic composition according to any one of claims 1-12, wherein the thermoplastic composition further comprises at least one additional additive, wherein the at least one additional additive comprises a filler, acid scavenger, anti-drip agent, antioxidant, antistatic agent, chain extender, colorant, de-molding agent, flow promoter, lubricant, mold release agent, plasticizer, quenching agent, flame retardant, UV reflecting additive, and combinations thereof.

14. An article formed from the thermoplastic composition according to any one of claims 1 to 13.

15. The article according to claim 14, wherein the article is a component of a laser welded device or housing.
